# EUROPEAN PATENT APPLICATION

(11) **EP 3 214 451 A1**
(43) Date of publication of application: **06.09.2017**
(21) Application number: 16158382.8
(22) Date of filing: 03.03.2016
(51) Int. Cl.: G01N 35/04, B65G 47/82

(54) **SAMPLE CARRIER HANDLING DEVICE**

(71) Applicant: Roche Diagnostics GmbH, 68305 Mannheim (DE); F. Hoffmann-La Roche AG, 4070 Basel (CH)
(72) Inventor: JAEGGI, Beat, 6015 Luzern (CH)
(74) Representative: Schwarz, Ralf

(57) **Abstract**

There is described a sample carrier handling devices (10) for manipulating a sample carrier wherein the sample carrier is configured to carry a sample container (110) containing a sample which is used in a diagnostics laboratory. The sample carrier handling device (10) comprises a housing (12) which is at least partially closed, defining a circumferential surface. A pull-push-element of the sample carrier handling device (108) is configured to pull, push or pull and push the sample carrier (108) with an end-portion of the pull-push-element. The pull-push-element defines a central axis. The pull-push-element is arranged in the housing (12) so that during a movement of the pull-push-element the central axis (20) of the pull-push-element changes its direction while the end portion of the pull-push-element remains in an axis of motion (16).

## Description

### Technical field

Embodiments of the invention refer to a handling device to manipulate sample carriers on a transport system for a diagnostics laboratory.

### Related art

The automation for handling samples of biological probes in a diagnostic laboratory becomes more and more important. For instance US 8,252,233 discloses a sample-processing system that improves total system processing efficiency., Furthermore WO 2011/138448 discloses a system for transporting containers between different stations, wherein the containers are accommodated in container carriers.
WO 2008/133708 concerns a method and a device for removing high priority samples from a primary conveyor.
WO 2013/072318 discloses a process station of devices for conveying biological product containers.

### Summary

An object of the invention is to handle sample carriers which transport sample containers for transporting samples in an efficient and reliable way.
This is realized by the sample carrier handling device according to claim 1, the diagnostic laboratory transport system according to claim 10 and the diagnostics laboratory system according to claim 14.

A first aspect of the present invention concerns a sample carrier handling devices for manipulating a sample carrier which is configured to carry a sample container. The sample container usually contains a sample which is obtained to be analyzed in a diagnostics laboratory. Also other samples, e.g. reactants or other materials used in the diagnostics laboratory can be transported by the sample carrier. The sample carrier handling device comprises a housing which is at least partially closed. The housing defines a circumferential surface of the sample carrier handling device. The sample carrier handling device further comprises a pull-push-element to pull, push or pull and push the sample carrier at least with an end-portion of the pull-push-element. The pull-push-element is arranged in the housing so that during a movement of the pull-push-element a central axis of the pull-push-element changes its direction while the end portion of the pull-push-element remains in a level of motion.

The central axis of the pull-push-element is in particular defined as the axis of longitudinal elongation of the pull-push-element.

Therefore the sample handling carrier device can be realized as a compact device with a reliable interaction with the sample carrier.

Another aspect of the sample carrier handling device is that the end-portion of the pull-push-element defines an axis of motion in the level of movement and the end portion is movable out of the circumferential surface along the axis of motion a maximum distance l between a first position and a second position of the pull-push-element.

In a further aspect of the sample carrier handling device in the first position at least more than half of the pull-push-element is placed inside the circumferential surface and in the second position at least more than half of the pull-push-element protrudes out of the housing, i.e. the circumferential surface. If the dimension of the circumferential surface along the axis of motion is m, the ratio of l over m is in the range of 1.1 to 1080 or in particular in the range of 1.2 to 8 or in particular 1.4 to 5.

In further embodiments the ratio of l over m is in the range of 2 to 10, 2 to 5 or 3 to 5.

Another aspect of the invention is that the end-portion is configured to interact with the sample carrier, e.g. the end-portion comprises a detachable fixation element to interact with the sample carrier to pull, push, or pull and push the sample carrier.
In particular for an inventive diagnostics laboratory sampling carrier transport system the sample carrier comprises a corresponding fixation device, respectively.

In a further aspect of the invention the detachable fixation element is a magnet, an electro-magnet, a movable hook, a suction-element, a snap, a gluing element, a hook-and-loop fastener element, and/or a contact surface configured to interact with the sample carrier.

In a further aspect the end-portion comprises an abutting surface. The abutting surface has a surface of a half-cylinder. The fixation element is attached only to a partial surface of the abutting surface, so that during the movement of the pull-push-element the fixation element gets into contact with a sample carrier surface in particular its corresponding fixation element at the first or second position and detaches form the sample carrier surface at the second or first position respectively, because the surface of the half-cylinder roll off the surface of the sample carrier. For instance the gluing element is arranged on the abutting surface of the pull-push-element.

This allows the automatic fixation and detaching of the sample carrier to the pull-push-element to pull, push, or pull and push the sample carrier.

In another aspect of the invention the handling device comprises a link motion to guide the pull-push-element during its motion. In particular a guide bar of the motion link is either realized by the push-pull-element itself or the guide bar of the motion link is connected to the pull-push-element. A link motion in the meaning used here is an element which deflects the push-pull-element or even reels and unreels the pull-push-element.

In a further aspect of the invention the pull-push-element is a flexible rod, e.g. in particular a chain or made out of flexible plastic, gum. Flexible means here that the rod can be deformed by the motion link but remains rigid or is supported when protruding out of the circumferential surface under usual environmental conditions appropriate to process a diagnostics laboratory.

In another aspect of the invention a driving unit is connected to the pull-push-element wherein the driving unit is connected with a wheel which is arranged to contact with the flexible rod to move the flexible rod in a guide bar of the link motion. For instance the wheel could be a gear 28 with meshes with pull-push-element as a chain or the wheel has a profile wherein a ratio of a circumferential surface of the flexible rod gets in contact with.

In a further aspect of the invention the pull-push-element is a rigid rod. Rigid means here that the rod does not change its shape under gravitational forces in usual environmental conditions. In particular the rigid rod is connected at its other end portion with a vertical movable carriage and the motion link is connected to the rigid rod with a link block at a point of deviation of the rigid rod. Vertical means in particular here approximately perpendicular with respect to the axis of motion. "Approximately perpendicular" means for the following and the scope of this disclosure within a range of 80 to 100 degrees in particular 85 to 95 degrees.

Another aspect of the invention is a diagnostics laboratory sample carrier transport system, comprising a transport device, a sample carrier and a sample carrier handling device as described above.

A further aspect of the inventive diagnostics laboratory sample carrier transport system is that the transport device comprises a transport belt to carry the sample carrier. The sample carrier handling device is connected to the transport belt so that the sample carrier are movable perpendicular with respect to a direction of motion of the transport belt.
This allows reliably loading and unloading of the sample carrier to and from the transport belt in a compact arrangement.

Another aspect of the inventive diagnostics laboratory sample carrier transport system is that it comprises a further transport belt arranged in parallel or perpendicular to the transport belt, wherein the sample carrier handling device is connected to the transport belt so that the sample carrier are movable from the transport belt to the further transport belt and/or form the further transport belt to the transport belt.

A further aspect of the inventive diagnostics laboratory sample carrier transport system is that the transport system comprises a transport surface supporting the transport carriers, wherein the sample carrier handling device is connected to the transport surface to push, pull, or push and pull the sample carrier onto or from the transport surface. This allows easy and reliable loading sample carriers with or without samples in the sample carriers onto and/or from the transport surface in a compact arrangement.

A further aspect of the invention is a diagnostics laboratory system comprising a pre-analytic system, a post-analytic system and a analyzer system and a diagnostic laboratory sample carrier transport system according as described above.

In a further aspect of the inventive diagnostics laboratory system at least one sample carrier handling device is connected to the diagnostics laboratory sample carrier transport system so that the sample carrier handling device is configured to transfer sample carrier between at least two out of the list of
- a pre-analytic system,
- a post-analytic system,
- an analyzer system,
- a diagnostic laboratory sample carrier transport system,
- a further diagnostic laboratory sample carrier transport system.

This allows the easy, reliable transfer of sample carriers with or without samples from one device to another device of the diagnostic laboratory system. Usually, the different devices uses their proper transport system, so that the sample carrier can be transferred between different transport systems of the diagnostics laboratory system and the proper transport systems by the sample carrier handling device.

However, other embodiments are feasible.

### Short description of the Figures

Further optional features and embodiments of the invention will be disclosed in more detail in the subsequent description of preferred embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
Fig. 1 is a perspective view of one embodiment of a sample carrier handling device;
Fig. 2 is a perspective view of the embodiment shown in figure 1 wherein one side wall is omitted;
Fig. 3 is a perspective view of a further embodiment of a sample carrier handling device;
Fig. 4 is a perspective view of the embodiment shown in Fig. 3 wherein one side wall is omitted;
Fig. 5 is a perspective view of a detail of an embodiment of a diagnostic laboratory sample carrier transport system;
Fig. 6 is a further perspective view of the embodiment shown in Fig. 5.

### Detailed description of the embodiments

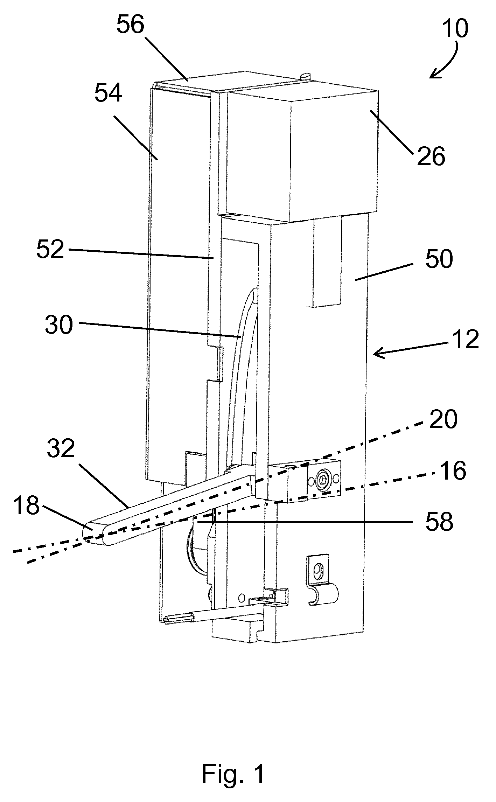

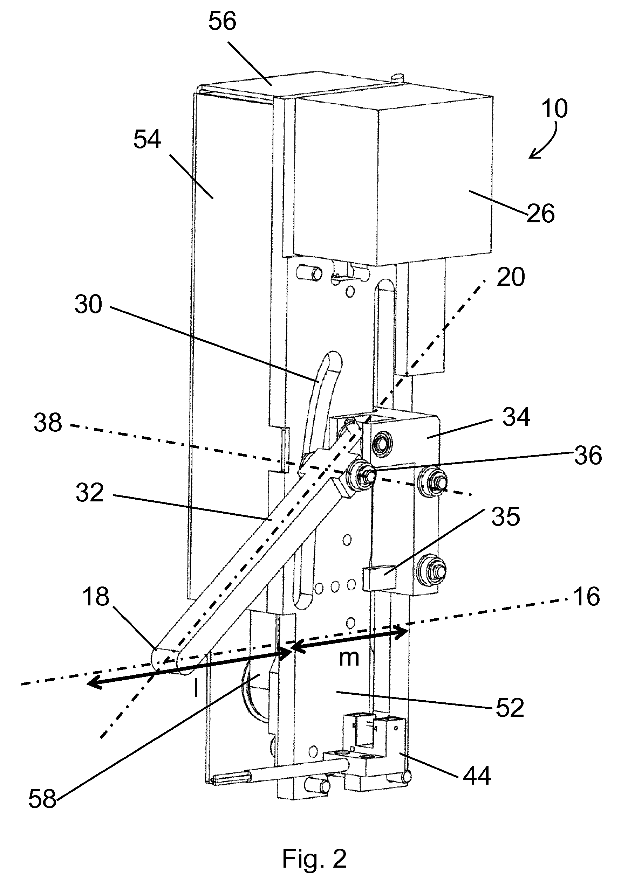

Figures 1 and 2 show a perspective view of one embodiment of a sample carrier handling device 10. The sample carrier handling device 10 comprises a housing 12. The housing 12 is assembled out of several parts. Some of these parts are shown in the figures. These parts are connected together by conventional connecting technologies such as screws, gluing, soldering, welding and/or other known technologies. The housing 12 has some open surface areas, i.e. the surface of the housing 12 is not totally closed. The outer surfaces of the parts of the housing 12 span a circumferential surface of the housing 12 which has approximately a shape of a cuboid.

Some parts of the housing 12 shown in Fig. 1 are a first side wall 50, a middle wall 52, a front wall 54 and a second side wall 56. A portion of the second side wall 56 is bended to form a portion of a top surface. The edge of this bended portion abuts to an end portion of the middle wall 52. A front wall 54 is arranged between the second side wall 56 and the middle wall 52. The second side wall, the front wall 54 and the middle wall spans out a belt drive part of the housing 12 in which a belt drive 58 is arranged.

The first side wall 50 is u-shaped facing with the edges of the arms of the u to the middle wall 52 so that a portion of the middle wall 52 and the first side wall 50 build up a frame. This frame defines a link-motion part of the housing.

In this frame the pull-push-element is movably fixed. In this embodiment the pull-push-element is a rigid rod 32. An end portion 18 of the rigid rod 32 protrudes out of the circumferential surface. The other end portion of the rod 32 opposite to the end portion 18 is fixed to a carriage 34.

The first side wall 50 is shorter than the middle wall 52 so that a rectangular recess is created. In this recess a driving unit 26 is arranged. A surface of the driving unit 26 fits at least partially into the cuboid-shaped circumferential surface of the housing 12. The driving unit 26 is connected to the belt drive 58 to move the belt drive 58 in both possible directions.

The carriage 34 is arranged in a slit 53 of the middle wall so that it prolongs in the link-motion part and the belt-drive part of the housing 12. In the belt drive part of the housing 12 the carriage 34 is fixed to the belt drive 58 so that the belt drive can move the carriage 34 in the slit 53 of the middle wall. The slit 53 defines the direction of motion of the carriage 34. In the link motion part the carriage comprises an acceptance to accept the other end portion of the rod 32, so that the end portion remains rotatable around a carriage axis. This carriage axis is arranged perpendicular to the elongation of the slit 53 in the middle wall.

The carriage 34 comprises a distant portion 35 which engages with a sensor element 44 to detect an end-point of the movement of the carriage 34. This sensor element 44 is in particular a light barrier which will be interrupted by the distant portion.

Adjacent to the other end portion of the rod 32 the rod 32 comprises two link blocks 36. The link blocks define an axis of deviation which is parallel to the carriage axis. The two link blocks engage into opposite guide bars 30 of the middle wall 52 and the side wall 50. The guide bars 30 and the link blocks 36 define a link motion. The guide bars can be designed as grooves in the wall or as slits.

The carriage 34 moves the rod 32 in the link motion, so that the end portion 18 of the rod 32 moves along an axis of motion 16 which is in particular straight and perpendicular to the slit 53 in the middle wall. In particular straight means herewith that the end portion 18 does not change its distance during its motion to a level of motion perpendicular to the slit 53 within a range of 0cm to 2cm In particular within a range of 0 to 1.5 cm, more in particular in a range of 0 to 1.0 cm or 0 to 0.5 cm.

Due to the link motion arrangement within the housing 12 the end portion 18 can move a distance along the axis of motion 16 which is greater than the width of the housing 12 along the axis of motion.

For the embodiment shown in Fig. 1 and 2 the guide bar 30 is curved so that the link motion provides that during movement of the carriage 34 the end portion 18 of the rigid rod 32 follows the axis of motion 16 within the accuracy of manufacturing possible. At a first position of the rigid rod 32 within the housing the carriage 34 is moved to an upper position and the rigid rod mainly is placed inside the circumferential surface. At a second position the carriage 34 is moved to a lower position. At this position the distant portion of the carriage engages with the sensor element 44, i.e. interrupts the light barrier. This generates a signal to indicate that the carriage is at its lower position. The rigid rod 32 is at this second position protruding a maximum length l out of the circumferential surface. The dimension of the circumferential surface in the direction of the axis of motion 16 is m. The ratio of l over m is for this embodiment in the range of 1.2 to 3.

The end portion 18 has a shape of half of a cylinder surface which its axis of rotation perpendicular to the central axis 20 of the rod 32. In other embodiments not shown in the figures this cylindrical surface comprises a further element or elements configured to interact with the surface of a sample carrier getting in touch with the end portion 18. For instance a magnet, an electro-magnet, a movable hook, a suction-element, a gluing element, a hook-and-loop fastener element, and/or a contact surface are arranged at the end portion 18 configured to interact with a correspondent element at the sample carrier surface, respectively.

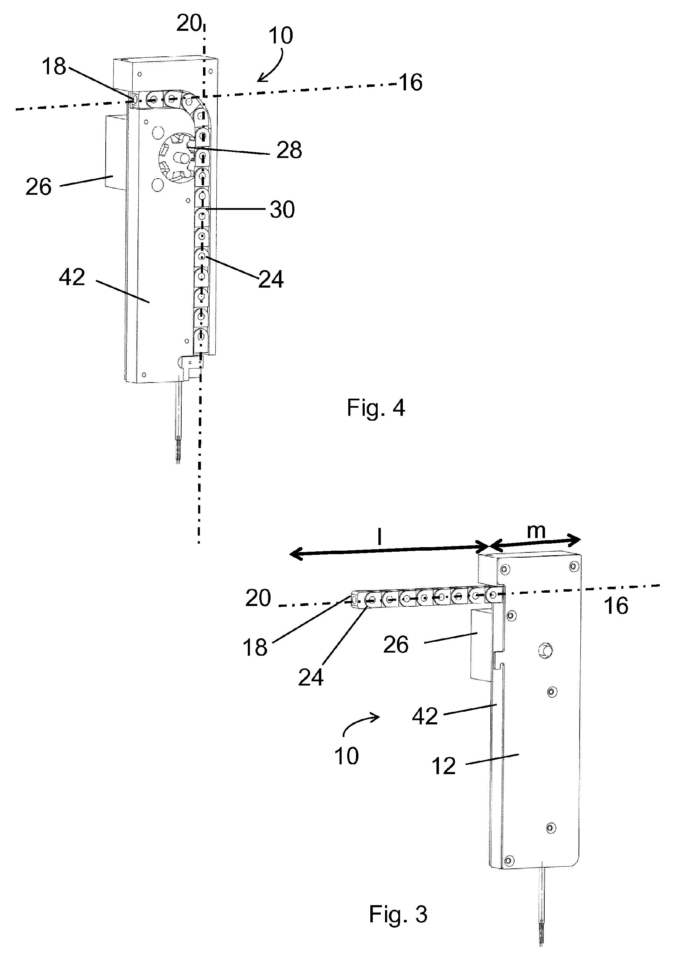

Fig. 3 and 4 presents a second embodiment of the sample carrier handling device 10.
In this embodiment the pull-push-element is realized as a chain. The central axis 20 of the chain 24 is defined as the axis on which most of the elements of the chain 24 are aligned with.

The chain 24 is guided in a guide bar 30 of a body 42 of the sample carrier handling device 10. The body 42 also defines a housing 12 which also realizes a circumferential surface. The body 42 comprises further a gear-wheel 28 arranged to mesh with the chain 24. A driving unit 26 is fixed to the body 42 and interacts with the gear wheel 28 to rotate the gear wheel 28. The guide bar deviates the chain 24 within the body 42 to perform a 90 degree change of movement. Therefore the central axis of the chain 24, as defined above changes its direction, during movement of the chain 24.

An end portion of the chain 24 protrudes out of the body 42 to pull, push or push and pull the sample carrier along the axis of motion. Due to the deviation of the chain in the body 42 the maximum distance of motion of the end portion of the chain 24 is greater the dimension of the body 42 along the axis of motion 16.

Either the sample handling carrier device 10 shown in this embodiment is arranged so that the chain elements block each other when they protrude out of the body 42. So the chain cannot be deviated by gravity in an unfortunate way. In another option the chain 24 slips on a surface provided by the sample carrier transport system. The surface supports the chain element to avoid deviation.

In Fig. 3 the chain protrudes out of the body 42 at a maximum length l. Here the central axis 16 of the chain and the axis of motion 20 coincide. The body 42, i.e. the circumferential surface has a length m along the axis of motion 16. The ratio of l over m can be for this embodiment as high as 20 for a reasonable height of the body 42, which is the dimension perpendicular to the axis of motion 16.

In Fig. 4 the chain is completely within the body 42 and the central axis 20 of the chain 24 is perpendicular to the axis of motion 16 along which the end portion 18 of the chain 24 will move.

In further embodiments not shown in the figures also the end portion of the chain comprises a further element or elements configured to interact with the surface of a sample carrier getting in touch with the end portion. For instance a magnet, an electro-magnet, a movable hook, a suction-element, a gluing element, a hook-and-loop fastener element, and/or a contact surface are arranged at the end portion configured to interact with a correspondent element at the sample carrier surface, respectively.

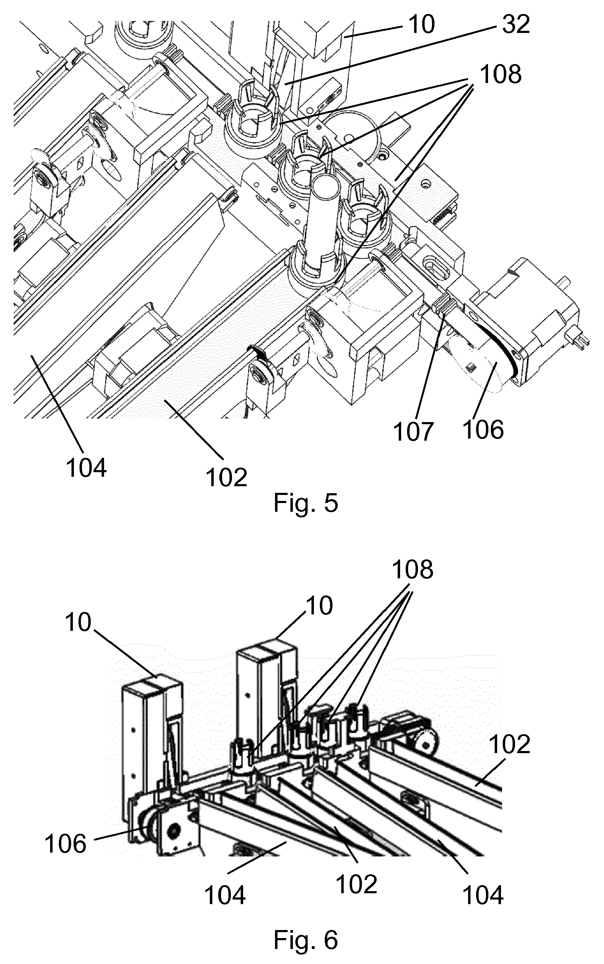

Figure 5 shows a detail of a view on a diagnostics laboratory sample carrier transport system. An incoming belt 102 transports sample carriers 108 with or without a sample containers 110 to an interconnecting belt 106. The incoming belt 102 pushes the sample carrier 108 onto the interconnecting belt 106. To push the sample carriers 108 from the interconnecting belt to an outgoing belt 104 a sample carrier handling device 10 is arranged in front of the outgoing belt 104. This realizes a very compact reliable way to handle the sample carriers for connecting the incoming belt 102 and the outgoing belt 104.

The interconnecting belt 106 is divided by protruding portions 107 into support sections adapted to receive one sample carrier 108. The protruding portions 107 are formed as a double ripple within the interconnecting belt 106.

The sample carrier 108 comprises a cylindrical shaped base and elongated finger-elements. The end portion of the pull-push-element strikes against this surface of the cylindrical shaped base to move the sample carrier 108 from the interconnecting belt 106 to the outgoing belt 104.

The elongated finger elements comprise flexible elements to support sample containers 110, which can then be transported within the sample carriers 108 on the transport system.

Figure 6 shows another view on a bigger detail of the diagnostics laboratory sample carrier transport system shown in Figure 5. A further incoming belt 102 and outgoing belt 104 are shown. Also here in front of the further outgoing belt a further sample carrier handling device 10 is placed. On the interconnecting belt 106 four sample carriers 108 are shown.

## Claims

1. A sample carrier handling devices (10) for manipulating a sample carrier (108) wherein the sample carrier (109) is configured to carry a sample container (110) containing a sample which is used in a diagnostics laboratory, the sample carrier handling device (10) comprises
a housing (12) which is at least partially closed, defining a circumferential surface, a pull-push-element to pull configured to push or pull and push the sample carrier (108) with an end-portion of the pull-push-element,
wherein the pull-push-element defines a central axis,
wherein the pull-push-element is arranged in the housing (12) so that during a movement of the pull-push-element the central axis (20) of the pull-push-element changes its direction while the end portion of the pull-push-element remains in an axis of motion (16).

2. A sample carrier handling device (10) according to claim 1,
wherein the pull-push-element is arranged in the housing (12) so that the end portion (18) is movable out of the circumferential surface along the axis of motion (16) a maximum distance l between a first position and a second position of the pull-push-element,
wherein the dimension of the circumferential surface along the axis of motion (16) is m,
wherein the ratio of l over m is in the range of 1.1 to 20 or in particular in the range of 1.2 to 8 or more in particular in the range of 1.4 to 5.

3. A sample carrier handling device (10) according to any preceding claim,
wherein the end-portion (18) is configured to interact with the sample carrier to pull, push or pull and push the sample carrier.

4. A sample carrier handling device according to the preceding claim, wherein the end-portion (18) comprises one or more out of the list of: a magnet, an electro-magnet, a movable hook, a suction-element, a gluing element, a hook-and-loop fastener element, a contact surface configured to interact with the sample carrier (108).

5. A sample carrier handling device (10) according to any preceding claim, comprising a link motion to guide the pull-push-element.

6. A sample carrier handling device (10) according to any preceding claim,
wherein the pull-push-element is a flexible rod, in particular a chain (24).

7. A sample carrier handling device (10) according to the preceding claim, comprising a driving unit (26) wherein the driving unit is connected to a wheel which is arranged to contact with the flexible rod to move the flexible rod in a guide bar (30) of the link motion.

8. A sample carrier handling device according to any of the claims 1 to 5
wherein the pull-push-element is a rigid rod (32).

9. A sample carrier handling device (10) according to the preceding claim,
wherein the rigid rod (32) is connected at its other end portion with a vertical movable carriage (34) and the motion link comprises a link block (36) which is connected to the rigid rod (32) at an axis of deviation (38) of the rigid rod (32).

10. A diagnostics laboratory sample carrier transport system, comprising a transport device, a sample carrier (108) and a sample carrier handling device (10) according to any preceding claim, wherein the sample carrier handling device (10) is connected with the transport device to handle the sample carrier (108).

11. A diagnostics laboratory sample carrier transport system according to claim 10 wherein the transport device comprises a transport belt to carry the sample carrier (108) wherein the sample carrier handling device (10) is connected to the transport belt so that the sample carrier (108) are movable perpendicular with respect to a direction of motion of the transport belt.

12. A diagnostics laboratory sample carrier transport system according to claim 11 comprising a further transport belt arranged in parallel or perpendicular to the transport belt, wherein the sample carrier handling device (10) is connected to the transport belt so that the sample carrier (108) are movable from the transport belt to the further transport belt and/or form the further transport belt to the transport belt.

13. A diagnostics laboratory sample carrier transport system according to claim 10, wherein the transport system comprises a transport surface supporting the transport carriers, wherein the sample carrier handling device is connected to the transport surface to push, pull, or push and pull the sample carrier on or form the transport surface.

14. A diagnostics laboratory system comprising a pre-analytic system, a post-analytic system and an analyzer system and a diagnostic laboratory sample carrier transport system according to any of the claims 10 to 13.

15. A diagnostics laboratory system according to claim 14 wherein at least one sample carrier handling device (10) is connected to the diagnostics laboratory sample carrier transport system so that the sample carrier handling device (10) is configured to transfer the sample carrier (108) between at least two out of the list of
- a pre-analytic system,
- a post-analytic system,
- an analyzer system,
- a diagnostic laboratory sample carrier transport system,
- a further diagnostic laboratory sample carrier transport system.
